# EUROPEAN PATENT SPECIFICATION

(11) **EP 3 575 161 B1**
(45) Date of publication and mention of the grant of the patent: **24.03.2021**
(21) Application number: 19168506.4
(22) Date of filing: 10.04.2019
(51) Int. Cl.: B60T 7/10, B60T 13/74, B60T 17/22, B60T 13/66

(54) **ELECTRIC PARKING BRAKE DEVICE**
ELEKTRISCHE FESTSTELLBREMSENVORRICHTUNG
DISPOSITIF DE STATIONNEMENT ÉLECTRIQUE

(30) Priority: 29.05.2018 JP 2018102073
(43) Date of publication of application: 04.12.2019
(73) Proprietor: Mitsubishi Jidosha Kogyo Kabushiki Kaisha, Tokyo 108-8410 (JP)
(72) Inventor: IWASAKI, Tomohiro, Tokyo, 108-8410 (JP)
(74) Representative: Vossius & Partner Patentanwälte Rechtsanwälte mbB

(56) References cited:
- JP-A- 2001 106 058
- US-A- 5 696 679
- US-A1- 2011 294 622

## Description

### TECHNICAL FIELD

The present disclosure relates to an electric parking brake device.

### BACKGROUND

In relation to an electric parking brake for an automobile operated by an electric driving source, Patent Document 1 (JP2001-106058A; claims 4, 5) discloses an invention to cancel the brake force of the parking brake in case a driving part such as an electric motor or an operation switch is out of order.

Claim 4 of Patent Document 1 discloses "an electric parking brake device having an electric driving means to lock and release parking brakes in response to operation of an operation member, including a control means to drive-control the electric driving means to lock and/or release the parking brake even if operation is not performed by the operation member when performing an operation set for the time of breakdown of the operation member", and claim 5 of the same discloses "the operation set for the time of breakdown of the operation member is operation that includes combination of a part or the all of the following: operation of a start switch of the vehicle, operation of a shift lever, operation of an accelerator pedal, and operation of a brake pedal."

Further, Patent Document 2 (JP2009-101818A) discloses a shift link control in the electric parking brake system. Patent Document 2 discloses a system including a parking brake automatic release device that automatically releases electric parking brakes in conjunction with shift operation when predetermined shift operation is performed while the electric parking brake is in operation, a shift link automatic release prohibition part that prohibits shift link automatic release of the parking brake automatic release device, and an in-prohibition special automatic release part that automatically releases the parking brake when the predetermined shift operation is performed and accelerating operation is performed even if shift link automatic release is prohibited by the shift link automatic release prohibition part

Patent Document US 5 696 679 A discloses an electric parking brake device, the operation of which is monitored by a park fault management device.

Patent Document US 2011/294622 A1 discloses a parking brake device with control means to diagnose abnormalities of the parking lock device.

### [SUMMARY]

However, none of Patent Documents discloses an electric parking brake device configured so as to enable a user to select and switch an operation mode between a switch operation mode to lock and release electric parking brakes by operation of an electric parking brake switch (EPB switch) and a shift link operation mode to lock and release the electric parking brakes by shift operation of a shift lever, wherein the operation mode can be also switched by the EPB switch.

With such an electric parking brake device configured so as to enable switching an operation mode between a switch operation mode to lock and release electric parking brakes (EPBs) by operation of an EPB switch and a shift link operation mode to lock and release the electric parking brakes by shift operation of a shift lever, wherein the operation mode can be also switched by the EPB switch, breakdown of the EPB switch while the parking brake is locked using the switch operation mode may bring about a situation where the parking brake cannot be released and the vehicle cannot be moved.

Thus, in view of the above, an object of at least one embodiment of the present invention is to provide an electric parking brake device including a switch operation mode capable of locking and releasing EPBs by switch operation of an EPB switch and a shift link operation mode capable of locking and releasing EPBs by shift operation of the shift lever, whereby it is possible to improve the measure to address breakdown of the EPB switch while the EPBs are locked, to improve the usability of the electric parking brake.
(1) According to the present invention, to achieve the above object, an electric parking brake device, configured to enable switching of a control mode between: a switch operation mode to lock and release electric parking brakes by operation of an electric parking brake switch; and a shift link operation mode to lock and release the electric parking brakes in conjunction with shift operation of a shift lever, includes: a switch breakdown determination part configured to determine breakdown of the electric parking brake switch; a brake operation determination part configured to determine whether the electric parking brakes are in a locked state; and a mode selection control part configured to select the shift link operation mode as the control mode if the switch breakdown determination part determines that the electric parking brake switch is broken down and the brake operation determination part determines that the electric parking brakes are in the locked state.
   With the above configuration (1), the electric parking brake device includes a mode selection control part configured to select the shift link operation mode as the control mode if the switch breakdown determination part determines that the electric parking brake switch is broken down and the brake operation determination part determines that the electric parking brakes are in the locked state. Thus, it is possible to release the EPB by operation of the shift lever, for instance, by moving the shift lever from shift P to a position other than shift P, and move the vehicle.
   Further, since the EPBs are released after confirming the user's intent to start through shift operation by the user, it is possible to avoid the risk of starting the vehicle at a timing not intended by the user. Thus, the measure to address a case in which the EPB switch is broken down while the EPBs are locked is improved, and thus it is possible to improve the usability of the electric parking brake device 1.
(2) Further, in some embodiments, the mode selection control part is configured to cancel the shift link operation mode after the electric parking brakes are released in conjunction with the shift operation, if the switch breakdown determination part determines that the electric parking brake switch is broken down.
   It is possible to avoid continuous locking and releasing of the electric parking brakes by shift operation with the EPB switch remaining broken down. Accordingly, for instance in a cold place, it is possible to avoid the risk of becoming unable to release lock of the EPBs due to the brakes being frozen when the EPBs are locked by shift operation (shift P) for braking.
(3) Further, in some embodiments, the mode selection control part is configured to prohibit selection of the shift link operation mode, if the switch breakdown determination part determines that the electric parking brake switch is broken down and the brake operation determination part determines that the electric parking brakes are released.
   With the above configuration (3), the mode selection control part is configured to prohibit selection of the shift link operation mode, if the switch breakdown determination part determines that the electric parking brake switch is broken down and the brake operation determination part determines that the electric parking brakes are released. Thus, it is possible to prohibit selecting the shift link operation mode again and avoid operation of the electric parking brakes by shift operation while the EPB switch remains broken down. Accordingly, for instance in a cold place, it is possible to avoid the risk of becoming unable to release lock of the EPBs due to the brakes being frozen when the EPBs are locked by shift operation (shift P) for braking while the EPB switch is broken down and the shift link operation mode is selected.
(4) In some embodiments, the electric parking brake device further includes a shift link notification part configured to notify a user of actuation or cancellation of the shift link operation mode.
   With the above configuration (4), it is possible to notify the user whether the shift link operation mode is ON or OFF with the shift link notification part.
(5) Further, in some embodiments, the electric parking brake switch has a movable structure for automatically recovering to a middle position between a first side and a second side, the electric parking brake switch being configured to lock the electric parking brakes when operated to the first side and to release the electric parking brakes when operated to the second side, and the control mode shifts to the shift link operation mode if the electric parking brake switch is operated to be at the first side for a predetermined period of time or longer, and the shift link operation mode is canceled if the electric parking brake switch is operated to be at the second side for a predetermined period of time or longer.
   With the above configuration (5), it is possible to lock and release the EPBs, and switch the operation mode, by using the same EPB switch.
(6) Further, in some embodiments, if the switch breakdown determination part determines that the electric parking brake switch is broken down and the brake operation determination part determines that the electric parking brakes are locked, the mode selection control part maintains the shift link operation mode while the shift link operation mode is selected as the control mode.
   According to the present invention, the electric parking brake device includes a mode selection control part configured to select the shift link operation mode as the control mode if the switch breakdown determination part determines that the electric parking brake switch is broken down and the brake operation determination part determines that the electric parking brakes are in the locked state, and thus it is possible to release the EPBs by operation of the shift lever, and move the vehicle. Thus, the measure to address a case in which the EPB switch is broken down while the EPBs are locked is improved, and thus it is possible to improve the usability of the electric parking brake device.

### BRIEF DESCRIPTION OF DRAWINGS

The present invention will become more fully understood from the detailed description given hereinbelow and the accompanying drawings which are given by way of illustration only, and thus are not limitative of the present invention and wherein:
FIG. 1 is a configuration diagram of the entire brake device of a vehicle including an electric parking brake device according to an embodiment.
FIG. 2 is a configuration view of an EPB system of an electric parking brake device according to an embodiment.
FIG. 3 is a configuration block diagram showing an operation mode and an operation state of EPB of an electric parking brake device according to an embodiment.
FIG. 4 is a control flow chart showing an EPB release control upon breakdown of an EPB switch.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

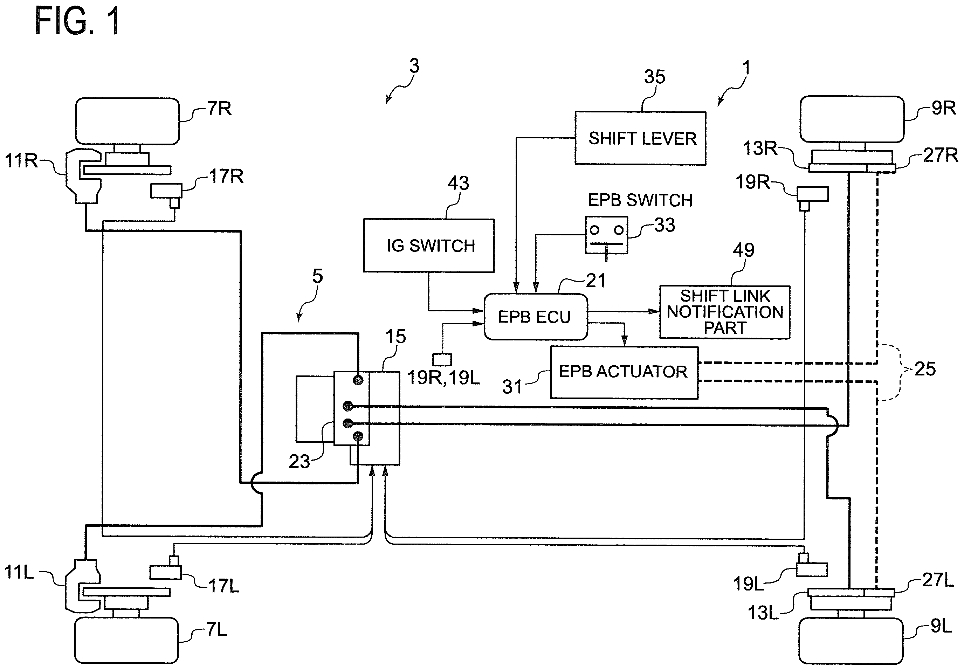

FIG. 1 is a configuration diagram of the entire brake device of a vehicle 3 including an electric parking brake device 1.

The vehicle 3 includes a hydraulic brake device 5 that generates a hydraulic brake force, and an electric parking brake device 1 that is capable of generating a parking brake force (parking brake) separately from the hydraulic brake device 5.

The hydraulic brake device 5 includes hydraulic brakes 11L, 11R, 13L, 13R, each of which applies a brake force corresponding to the brake hydraulic pressure to each of the left and right front wheels 7L, 7R, and the left and right rear wheels 9L, 9R. Further, the hydraulic brake device 5 includes a hydraulic brake electronic control unit (ECU) 15 which controls the brake forces applied by the respective hydraulic brakes 11L, 11R, 13L, 13R.

As depicted in FIG. 1, in the present embodiment, the hydraulic brakes 11L, 11R corresponding to the left and right front wheels 7L, 7R are hydraulic brakes for disc brakes, and the hydraulic brakes 13L, 13R corresponding to the left and right rear wheels 9L, 9R are hydraulic brake for drum brakes. Nevertheless, this embodiment is not limitative.

The wheels 7L, 7R, 9L, 9R respectively include wheel speed sensors 17L, 17R, 19L, 19R that detect the wheel speed of the respective wheels. The signals from the wheel speed sensors 17L, 17R, 19L, 19R are input into the hydraulic brake ECU 15. Furthermore, signals from the rear wheel speed sensors 19L, 19R are input into an electric parking brake (EPB) ECU 21 described below.

Further, the hydraulic brake ECU 15 is connected to a brake hydraulic unit 23 capable of adjusting the hydraulic pressure to each of the hydraulic brakes 11L, 11R, 13L, 13R, and the brake force applied by each of the hydraulic brakes 11L, 11R, 13L, 13R is controlled via the brake hydraulic unit 23.

For instance, besides the brake force control corresponding to the brake operation of the driver, the hydraulic brake ECU 15 performs the following controls: electronic brake force distribution (EBD) in which the distribution of the brake forces of the front and rear wheels 7, 9 are controlled on the basis of the operation state, anti-lock brake system (ABS) in which the brake force, handling, and the vehicle stability are maintained while preventing lock of wheels upon brake operation and the like at the time of sudden brake or when running on a low friction coefficient road surface on the basis of the wheel speed, and active stability control (ASC) in which a driving force is ensured while stabilizing the attitude of the vehicle by adjusting the respective brake forces applied by the hydraulic brakes 11L, 11R, 13L, 13R.

Further, as depicted in FIG. 1, the electric parking brake device 1 includes electric parking brakes (EPB) 27L, 27R that apply brake forces to drum brakes of the left and right rear wheels 9L, 9R in response to the control by the EPBECU 21, through tension of a cable 25, separately from the brake forces applied by the hydraulic brakes 13L, 13R.

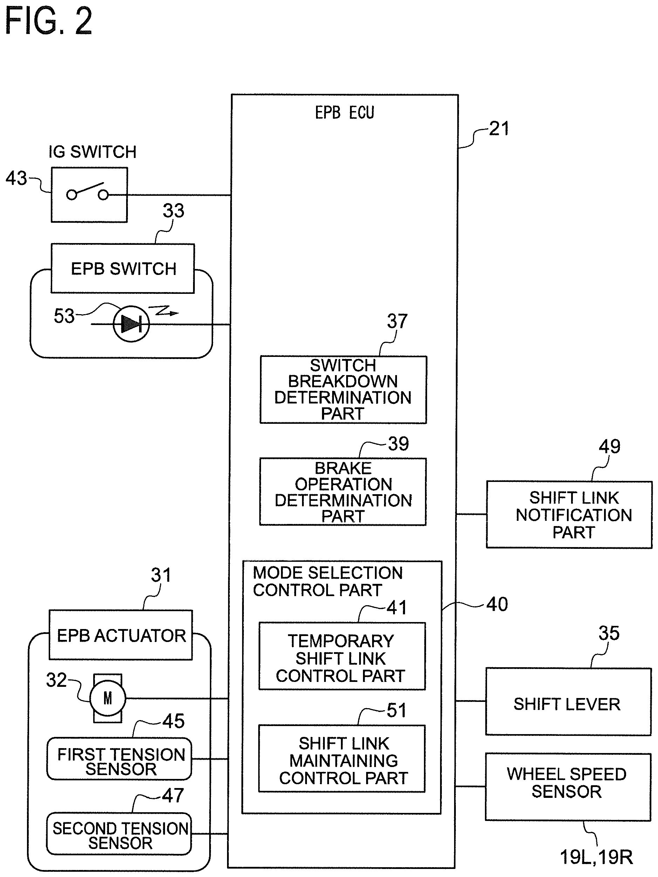

In response to control by the EPBECU 21, the output shaft of the EPB motor 32 (see FIG. 2) constituting the EPB actuator 31 rotates in one direction, and the rotation of the output shaft pulls the cable 25 with a predetermined tension. Accordingly, a predetermined brake force is applied to each of the EPBs 27L, 27R of the left and right rear wheels 9L, 9R. Further, when the output shaft rotates in the other direction, the brake force is cancelled.

The EPBECU 21 is operated by a user (driver), and enables control of lock and release of the EPBs 27L, 27R by signals based on operation of an EPB switch 33 disposed on the center console between the front seats, the instrument panel, or the like. Further, the EPBECU 21 can be also controlled by signals based on shift operation of a shift lever 35 for changing the gear positions (P, R, D, N, etc.) of an automatic transmission operated by the user. Further, the shift operation is not limited to operation of the shift lever of an automatic transmission, and may be operation of a shift lever for changing the range of an electric car or a hybrid car, or a shift lever of a manual transmission.

Accordingly, the electric parking brake device 1 has a switch operation mode M1 that enables locking and releasing the EPBs 27L, 27R by operation of the EPB switch 33, and a shift link operation mode M2 that enables locking and releasing the EPBs 27L, 27R also by shift operation of the shift lever 35. In the shift link operation mode M2, the EPBs 27L, 27R can be also locked and released by operating the EPB switch 33. That is, in the shift link operation mode M2, the EPBs 27L, 27R can be locked and released at least one of by operating the EPB switch 33 and by operating the shift lever 35.

Furthermore, the operation mode can be switched between the switch operation mode M1 and the shift link operation mode M2 by using the EPB switch 33. That is, the operation mode can be switched by a control different from the control for locking and canceling the EPBs 27L, 27R in the switch operation mode M1. For instance, the operation procedure is different, or the duration of ON operation or the duration of OFF operation is different even though the operation procedure is the same.

Next, with reference to FIG. 2, the EPBECU 21 will be described. As depicted in FIG. 2, the EPBECU 21 includes a switch breakdown determination part 37 that determines breakdown of the EPB switch 33, a brake operation determination part 39 that determines whether the EPBs 27L, 27R are locked, and a mode selection control part 40 that selects the shift link operation mode M2 as the control mode if a predetermined condition is satisfied, that is, if the switch breakdown determination part 37 determines that the electric parking brake switch 33 is broken down and the brake operation determination part 39 determines that the EPBs 27L, 27R are in the locked state.

The mode selection control part 40 includes a temporary shift link control part 41 that enables operation of the shift link operation mode M2 temporarily if it is determined that the predetermined condition is satisfied when the operation mode is switched to the switch operation mode M1, and a shift link maintaining control part 51 that maintains the shift link operation mode M2 if it is determined that the above predetermined condition is satisfied when the operation mode is switched to the shift link operation mode M2 (described below).

Further, although not depicted, the EPBECU 21 includes a signal input part, a signal output part, a calculation part, and a storage part, for instance. The signal input part receives signals from an ignition switch (IG switch) 43, as depicted in FIGs. 1 and 2. Further, the EPB switch 33 inputs switch signals in the switch operation mode M1 for locking and releasing the EPBs 27L, 27R, signals to switch the operation mode between the switch operation mode M1 and the shift link operation mode M2, and other signals required to determine breakdown of the EPB switch 33. Furthermore, the shift lever 35 inputs signals of shift operation that indicates the user's intent to move forward, or to park. Furthermore, signals are input from the wheel speed sensors 19L, 19R of the rear wheels 9L, 9R.

Further, the signal output part outputs driving signals to lock and release the EPBs 27L, 27R, to the EPB motor 32 constituting the EPB actuator 31. Furthermore, signals are input from the first tension sensor 45 and the second tension sensor 47 that detect tension of the cable 25 corresponding to the lock and release of the EPBs 27L, 27L generated from rotation of the output shaft of the EPB motor 32.

Further, the signal output part outputs, to a shift link notification part 49, a signal that indicates whether the operation mode is the shift link operation mode (shift link ON) M1 or the switch operation mode (shift link OFF) M2.

The switch breakdown determination part 37 determines breakdown of the EPB switch 33 itself (operation failure such as disconnection of the switch circuit) and breakdown due to disconnection of the line between the EPB switch 33 and the EPBECU 21. For instance, breakdown is determined when a parking brake lock signal or a parking brake release signal is output continuously for a predetermined period of time or longer from the EPB switch 33 to the EPBECU 21, or when the EPB switch 33 does not output a parking brake release signal even though signals from the wheel speed sensors 19L, 19R indicate that the vehicle is running. The condition for determining breakdown is set in the EPBECU 21.

The brake operation determination part 39 determines whether the EPBs 27L, 27R are locked or released. For instance, the brake operation determination part 39 determines whether the EPBs 27L, 27R are locked or released on the basis of signals from the first tension sensor 45 and the second tension sensor 47.

The temporary shift link control part 41 temporarily enables operation of the shift link operation mode M2 if the switch breakdown determination part 37 determines that the EPB switch 33 is broken down and the brake operation determination part 39 determines that the EPBs 27L, 27R are locked, while the control mode is switched to the switch operation mode M1 as described above.

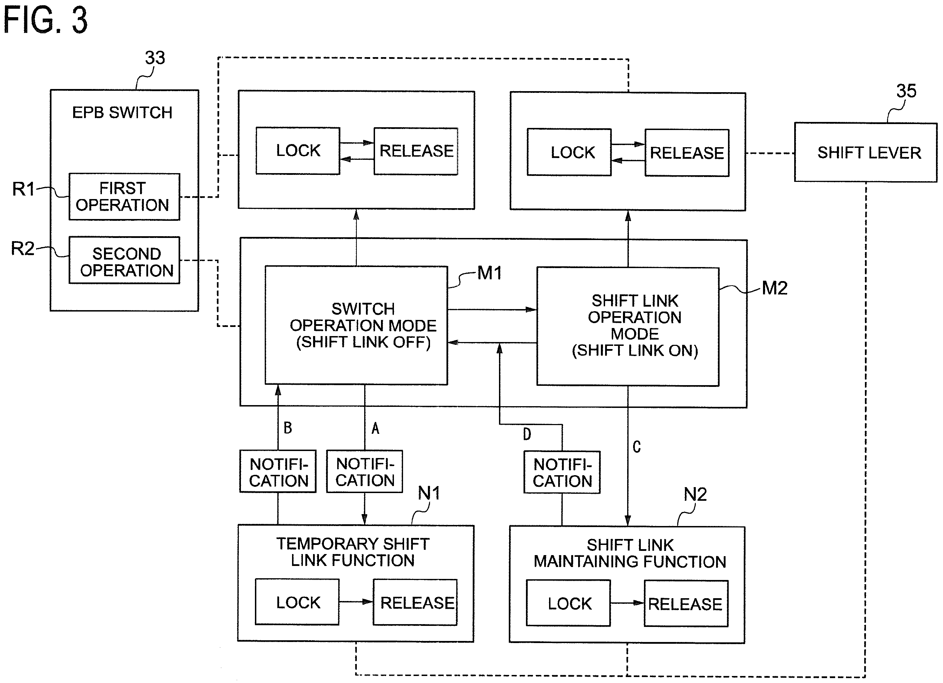

The control state by the temporary shift link control part 41 will be described using the schematic configuration block diagram in FIG. 3 showing the operation mode and the operation state of the parking brake. When the operation mode is switched to the switch operation mode M1 by the second operation R2 of the EPB switch 33, if it is determined that the EPB switch 33 is broken down and the EPBs 27L, 27R are locked, the temporary shift link control part 41 enables shifting to the temporary shift link function N1 indicated by arrow A and releasing the locked state by shift operation of the shift lever 35. Further, to notify a user of shift to the temporary shift link function N1 indicated by arrow A, the shift link notification part 49 notifies that the shift link is ON. For instance, a message "shift link is ON" is displayed.

According to the above embodiment, even in a case where the EPB switch 33 is broken down while the switch operation mode M1 is used and the EPBs 27L, 27R are locked, the temporary shift link control part 41 enables shift link operation temporarily, and thus it is possible to release the EPBs 27L, 27R by operation of the shift lever 35, for instance, by moving the shift lever 35 from shift P to a position other than shift P, and move the vehicle.

Further, since the EPBs 27L, 27R are released after confirming the user's intent to start through shift operation of the user, it is possible to avoid the risk of starting the vehicle 3 at a timing not intended by the user.

As described above, the measure to address a case where the EPB switch 33 is broken down while the EPBs 27L, 27R are locked is improved, and thus it is possible to improve the usability of the electric parking brake device 1.

Further, in some embodiments, the temporary shift link control part 41 turns OFF the operation of the shift link operation mode M2 as indicated by arrow B in FIG. 3, when the EPBs 27L, 27R are released by shift operation. Further, the shift link notification part 49 notifies the user that the shift link is OFF. For instance, a message "shift link is OFF" is displayed.

That is, after the operation mode is shifted to the temporary shift link function N1 and the EPBs 27L, 27R are released by shift operation, where the shift link operation mode M2 is OFF (canceled) again, the EPB switch 33 is prohibited of lock and release of the first operation R1 and the switch of the operation mode of the second operation R2 due to breakdown. That is, in a state where the EPB switch 33 is determined to be broken down and the EPBs 27L, 27R are released, selecting the shift link operation mode again is prohibited.

Further, it is possible to notify the user that the shift link is OFF with the shift link notification part 49. Further, by prohibiting selecting the shift link operation mode again, it is possible to avoid locking of the EPBs 27L, 27R by shift operation while the EPB switch 33 remains broken down. Accordingly, for instance in a cold place, it is possible to avoid the risk of becoming unable to release lock of the EPBs due to the brakes being frozen when the EPBs are locked by shift operation (shift P) for braking while the EPB switch is broken down and the shift link operation mode is selected.

Further, in some embodiments, the EPBECU 21 further includes the shift link maintaining control part 51, as depicted in FIG. 2. The shift link maintaining control part 51 maintains operation of the shift link operation mode M2 if the switch breakdown determination part 37 determines that the EPB switch 33 is broken down and the brake operation determination part 39 determines that the EPBs 27L, 27R are locked, while the control mode is switched to the shift link operation mode M2.

That is, as depicted in FIG. 3, when the operation mode is switched to the shift link operation mode M2 by the second operation R2 of the EPB switch 33, if it is determined that the EPB switch 33 is broken down and the EPBs 27L, 27R are locked, the shift link maintaining control part 51 enables shifting to the shift link maintaining function N2 indicated by arrow C and releasing the locked state by shift operation of the shift lever 35.

With the above configuration, the shift link maintaining control part 51 functions and enables releasing the EPBs 27L, 27R by shift operation, and thus it is possible to release the EPBs 27L, 27R by operation of the shift lever 35, for instance, by moving the shift lever 35 from shift P to a position other than shift P, and move the vehicle.

Further, in some embodiments, the shift link maintaining control part 51 turns OFF the operation of the shift link operation mode M2 as indicated by arrow D, when the EPBs 27L, 27R are released by shift operation. Further, the shift link notification part 49 notifies the user that the shift link is OFF. For instance, a message "shift link is OFF" is displayed.

That is, after the operation mode is shifted to the shift link maintaining function N2 and the EPBs 27L, 27R are released by shift operation, where the shift link operation mode M2 is OFF (released) again, the EPB switch 33 is prohibited of lock and release of the first operation R1 and the switch of the operation mode of the second operation R2 due to breakdown. That is, in a state where the EPB switch 33 is determined to be broken down and the EPBs 27L, 27R are released, selecting the shift link operation mode again is prohibited.

While in the shift link operation mode M2, as indicated by arrow D, turning the shift link operation mode M2 OFF again and further notifying the turning OFF is effective in making the user recognize occurrence of breakdown of the entire EPB system including malfunction of the EPB switch 33. Further, by prohibiting selecting the shift link operation mode again, it is possible to avoid operation of the EPBs 27L, 27R by shift operation while the EPB switch 33 remains broken down. Accordingly, for instance in a cold place, it is possible to avoid the risk of becoming unable to release lock of the EPBs due to the brakes being frozen when the EPBs are locked by shift operation (shift P) for braking while the EPB switch is broken down and the shift link operation mode is selected.

Furthermore, while the shift link notification part 49 notifies the user that the shift link operation mode M2 is actuated or canceled, the method to notify that the shift link operation mode M2 is actuated or canceled (e.g. notification time, content of notification) may be changed between the time when the EPB switch 33 is normal and the time when the EPB switch 33 is broken down. In this way, it is possible to notify the user of the state of the EPB switch 33 (normal or broken down) more clearly.

Further, in some embodiments, the EPB switch 33 has a vertically movable structure for automatically recovering to the middle position. When the EPB switch 33 is pulled up, the EPBs 27L, 27R are locked. When the EPB switch 33 is pushed down, the EPBs 27L, 27R are released. When the pull-up operation continues for a predetermined period of time or longer, the operation mode shifts to the shift link operation mode M2. When the push-down operation continues for a predetermined period of time or longer, the shift link operation mode M2 is canceled and the operation mode returns to the switch operation mode M1. Further, besides the vertically movable structure, a front-rear movable structure that moves in the front-rear direction of the vehicle, or a left-right movable structure that moves in the width direction of the vehicle can be used.

That is, the EPB switch 33 is capable of outputting signals that can select 4 functions: lock of the EPBs 27L, 27R, release of the same, the switch operation mode M1, and the shift link operation mode M2 (see the EPB switch 33 in FIG. 2). Further, a switch indicator 53 that displays the operation state of the switch is disposed on the body portion of the EPB switch 33.

With the above configuration, the same EPB switch 33 can lock and release the EPBs 27L, 27R through the first operation R1, and switch the operation mode through the second operation R2.

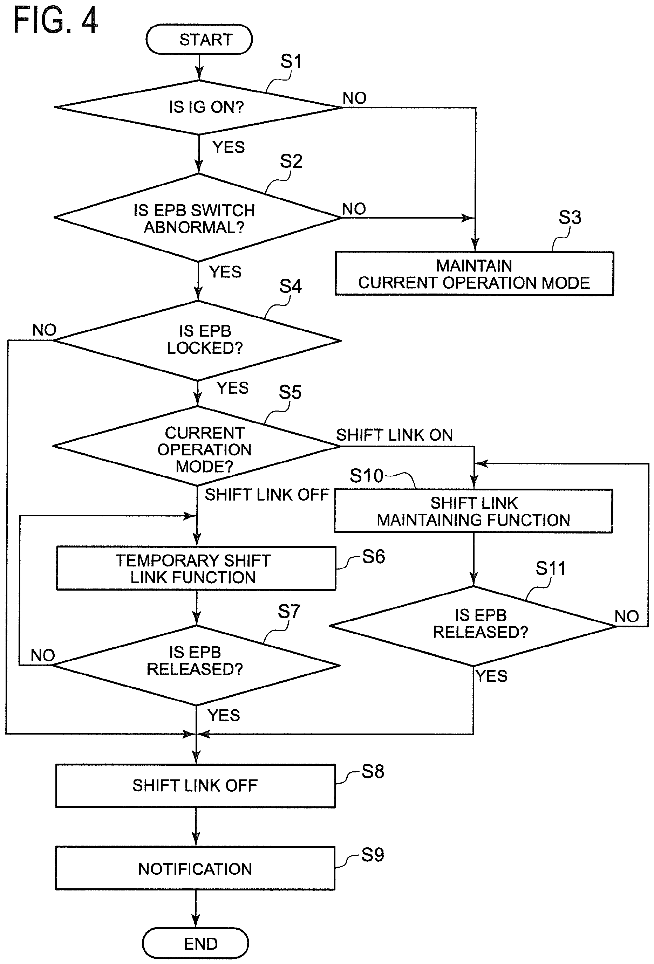

Further, in some embodiments, the EPBECU 21 includes both of the temporary shift link control part 41 and the shift link maintaining control part 51. The control flow of this EPBECU 21 will be described below with reference to FIG. 4.

In step S1, it is determined whether the signal from the ignition switch (IG switch) 43 is ON. That is, it is determined whether the vehicle 3 is in a started state. If the determination in step S1 is Yes, the control proceeds to step S2. In step S2, the switch breakdown determination part 37 determines whether the state of the EPB switch 33 is abnormal. If the determination in step S1 is No, the control proceeds to step S3, and in step S3, the current operation mode is maintained.

Further, if the EPB switch 33 is broken down and abnormal in step S2, it is determined Yes and the control proceeds to step S4. In step S4, the brake operation determination part 39 determines whether the EPBs 27L, 27R are locked.

If it is determined that the EPBs 27L, 27R are locked in step S4 (Yes), the control proceeds to step S5. In step S5, the current operation mode is determined. If the current operation mode is shift link OFF (switch operation mode), the control proceeds to step S6. In step S6, the temporarily shift link function is executed, and the user is notified that the shift link is turned ON.

Then, in step S7, it is determined whether the EPBs 27L, 27R are released by executing the temporarily shift link function. If the determination in step S7 is Yes, the control proceeds to step S8. In step S8, the shift link is turned OFF and in step S9, the user is notified that the shift link is turned OFF.

If the determination in step S7 is No, the method returns to step S6 and repeats itself until released by shift operation.

Further, if the determination of the current operation mode in step S5 is shift link ON, the control proceeds to step S10. In step S10, the shift link maintaining function is executed. Then, in step S11, it is determined whether the EPBs 27L, 27R are released by executing the shift link maintaining function. If the determination in step S11 is Yes, the method proceeds to step S8. In step S8, the shift link is turned OFF and in step S9, the user is notified that the shift link is turned OFF.

If the determination in step S11 is No, the control returns to step S10 and repeats itself until release by shift operation.

On the other hand, if it is determined that the EPBs 27L, 27R are not locked in step S4, that is, if the EPB switch 33 is abnormal but the EPBs 27L, 27R are not locked (No), the control proceeds to step S8. In step S8, the shift link is turned OFF and in step S9, the user is notified that the shift link is turned OFF.

With the EPBECU 21 having the above control flow, even in a case where the EPB switch 33 is broken down while the switch operation mode (shift link OFF) M1 is used and the EPBs 27L, 27R are locked, the temporary shift link function N1 is executed, and it is possible to release the EPBs 27L, 27R by operation of the shift lever 35, for instance, by moving the shift lever 35 from shift P to a position other than shift P, and move the vehicle.

Furthermore, even in a case where the EPB switch 33 is broken down while the shift link mode (shift link ON) M2 is used and the EPBs 27L, 27R are locked, the shift link maintaining function N2 is executed, and it is possible to release the EPBs 27L, 27R by operation of the shift lever 35, for instance, by moving the shift lever 35 from shift P to a position other than shift P, and move the vehicle.

### Industrial Applicability

According to at least one embodiment of the present invention, the electric parking brake device includes a switch operation mode capable of locking and releasing EPBs by switch operation of an EPB switch and a shift link operation mode capable of locking and releasing EPBs by shift operation of the shift lever, configured so as to enable switching the operation mode by operation of the EPB switch, whereby it is possible to improve the measure to address breakdown of the EPB switch while the EPBs are locked, to improve the usability of the electric parking brake, and thus is applicable to an electric parking brake device for an automobile.

## Claims

1. An electric parking brake device (1) configured to enable switching of a control mode between:
a switch operation mode to lock and release electric parking brakes (27L, 27R) by operation of an electric parking brake switch (33); and
a shift link operation mode to lock and release the electric parking brakes (27L, 27R) in conjunction with shift operation of a shift lever (35), **characterized in that** the electric parking brake device (1) comprises
a switch breakdown determination part (37) configured to determine breakdown of the electric parking brake switch (33);
a brake operation determination part (39) configured to determine whether the electric parking brakes (27L, 27R) are in a locked state; and
a mode selection control part (40) configured to select the shift link operation mode as the control mode if the switch breakdown determination part (37) determines that the electric parking brake switch (33) is broken down and the brake operation determination part (39) determines that the electric parking brakes (27L, 27R) are in the locked state.

2. The electric parking brake device (1) according to claim 1,
wherein the mode selection control part (40) is configured to cancel the shift link operation mode after the electric parking brakes (27L, 27R) are released in conjunction with the shift operation, if the switch breakdown determination part (37) determines that the electric parking brake switch (33) is broken down.

3. The electric parking brake device according to claim 2,
wherein the mode selection control part (40) is configured to prohibit selection of the shift link operation mode, if the switch breakdown determination part (37) determines that the electric parking brake switch (33) is broken down and the brake operation determination part (39) determines that the electric parking brakes (27L, 27R) are released.

4. The electric parking brake device according to any one of claims 1 to 3, further comprising a shift link notification part (49) configured to notify a user of actuation or cancellation of the shift link operation mode.

5. The electric parking brake device according to any one of claims 1 to 4,
wherein the electric parking brake switch (33) has a movable structure for automatically recovering to a middle position between a first side and a second side, the electric parking brake switch (33) being configured to lock the electric parking brakes (27L, 27R) when operated to the first side and to release the electric parking brakes (27L, 27R) when operated to the second side, and
wherein the control mode shifts to the shift link operation mode if the electric parking brake switch (33) is operated to be at the first side for a predetermined period of time or longer, and the shift link operation mode is canceled if the electric parking brake switch (33) is operated to be at the second side for a predetermined period of time or longer.

6. The electric parking brake device according to claim 1,
wherein, if the switch breakdown determination part determines that the electric parking brake switch is broken down and the brake operation determination part determines that the electric parking brakes are locked, the mode selection control part maintains the shift link operation mode while the shift link operation mode is selected as the control mode.

## Patentansprüche

1. Elektrische Feststellbremsenvorrichtung (1), die dafür konfiguriert ist, ein Umschalten eines Steuermodus zu ermöglichen zwischen:
einem Schalterbetriebsmodus zum Verriegeln und Lösen elektrischer Feststellbremsen (27L, 27R) durch Betätigen eines Schalters (33) für die elektrischen Feststellbremsen; und
einem Schaltverknüpfungsbetriebsmodus zum Verriegeln und Lösen der elektrischen Feststellbremsen (27L, 27R) in Verbindung mit einem Schaltvorgang eines Schalthebels (35),
**dadurch gekennzeichnet, dass** die elektrische Feststellbremsenvorrichtung (1) aufweist:
einen Schalterausfallbestimmungsabschnitt (37), der dafür konfiguriert ist, einen Ausfall des Schalters (33) für die elektrischen Feststellbremsen zu bestimmen;
einen Bremsenbetätigungsbestimmungsabschnitt (39), der dafür konfiguriert ist, zu bestimmen, ob die elektrischen Feststellbremsen (27L, 27R) sich in einem verriegelten Zustand befinden; und
einen Modusauswahlsteuerabschnitt (40), der dafür konfiguriert ist, den Schaltverknüpfungsbetriebsmodus als den Steuermodus auszuwählen, wenn der Schalterausfallbestimmungsabschnitt (37) bestimmt, dass der Schalter (33) für die elektrischen Feststellbremsen ausgefallen ist, und der Bremsenbetätigungsbestimmungsabschnitt (39) bestimmt, dass sich die elektrischen Feststellbremsen (27L, 27R) im verriegelten Zustand befinden.

2. Elektrische Feststellbremsenvorrichtung (1) nach Anspruch 1, wobei der Modusauswahlsteuerabschnitt (40) dafür konfiguriert ist, den Schaltverknüpfungsbetriebsmodus aufzuheben, nachdem die elektrischen Feststellbremsen (27L, 27R) in Verbindung mit einem Schaltvorgang gelöst werden, wenn der Schalterausfallbestimmungsabschnitt (37) bestimmt, dass der Schalter (33) für die elektrischen Feststellbremsen ausgefallen ist.

3. Elektrische Feststellbremsenvorrichtung nach Anspruch 2,
wobei der Modusauswahlsteuerabschnitt (40) dafür konfiguriert ist, die Auswahl des Schaltverknüpfungsbetriebsmodus zu verhindern, wenn der Schalterausfallbestimmungsabschnitt (37) bestimmt, dass der Schalter (33) für die elektrischen Feststellbremsen ausgefallen ist, und der
Bremsenbetätigungsbestimmungsabschnitt (39) bestimmt, dass die elektrischen Feststellbremsen (27L, 27R) gelöst sind.

4. Elektrische Feststellbremsenvorrichtung nach einem der Ansprüche 1 bis 3, ferner mit einem Schaltverknüpfungsbenachrichtigungsabschnitt (49), der dafür konfiguriert ist, einen Benutzer über die Aktivierung oder Deaktivierung des Schaltverknüpfungsbetriebsmodus zu benachrichtigen.

5. Elektrische Feststellbremsenvorrichtung nach einem der Ansprüche 1 bis 4,
wobei der Schalter (33) für die elektrischen Feststellbremsen eine bewegliche Struktur zum automatischen Zurückstellen in eine mittlere Position zwischen einer ersten Seite und einer zweiten Seite aufweist, wobei der Schalter (33) für die elektrischen Feststellbremsen dafür konfiguriert ist, die elektrischen Feststellbremsen (27L, 27R) zu verriegeln, wenn er zur ersten Seite bewegt wird, und die elektrischen Feststellbremsen (27L, 27R) zu lösen, wenn er zur zweiten Seite bewegt wird,
wobei der Steuermodus auf den Schaltverknüpfungsbetriebsmodus schaltet, wenn der Schalter (33) für die elektrischen Feststellbremsen für eine vorgegebene Zeitdauer oder länger zur ersten Seite bewegt wird, und der Schaltverknüpfungsbetriebsmodus aufgehoben wird, wenn der Schalter (33) für die elektrischen Feststellbremsen für eine vorgegebene Zeitdauer oder länger zur zweiten Seite bewegt wird.

6. Elektrische Feststellbremsenvorrichtung nach Anspruch 1,
wobei, wenn der Schalterausfallbestimmungsabschnitt bestimmt, dass der elektrische Feststellbremsenschalter ausgefallen ist und der Bremsenbetätigungsbestimmungsabschnitt bestimmt, dass die elektrischen Feststellbremsen verriegelt sind, der Modusauswahlsteuerabschnitt den Schaltverknüpfungsbetriebsmodus aufrechterhält, während der Schaltverknüpfungsbetriebsmodus als der Steuermodus ausgewählt ist.

## Revendications

1. Dispositif de freins de stationnement électriques (1) configuré de manière à permettre la commutation d'un mode de commande entre :
un mode d'opération de commutateur pour verrouiller et libérer des freins de stationnement électriques (27L, 27R) par l'opération d'un commutateur de freins de stationnement électriques (33) ; et
un mode d'opération de biellette de changement de vitesse pour verrouiller et libérer les freins de stationnement électriques (27L, 27R) conjointement avec une opération de changement de vitesse d'un levier de vitesse (35) ;
**caractérisé en ce que** le dispositif de freins de stationnement électriques (1) comprend :
une partie de détermination de panne de commutateur (37) configurée de manière à déterminer une panne du commutateur de freins de stationnement électriques (33) ;
une partie de détermination d'opération de freins (39) configurée de manière à déterminer si les freins de stationnement électriques (27L, 27R) sont dans un état verrouillé ; et
une partie de commande de sélection de mode (40) configurée de manière à sélectionner le mode d'opération de biellette de changement de vitesse, en tant que le mode de commande, si la partie de détermination de panne de commutateur (37) détermine que le commutateur de freins de stationnement électriques (33) est en panne et si la partie de détermination d'opération de freins (39) détermine que les freins de stationnement électriques (27L, 27R) sont dans l'état verrouillé.

2. Dispositif de freins de stationnement électriques (1) selon la revendication 1,
dans lequel la partie de commande de sélection de mode (40) est configurée de manière à annuler le mode d'opération de biellette de changement de vitesse après que les freins de stationnement électriques (27L, 27R) ont été libérés conjointement avec l'opération de changement de vitesse, si la partie de détermination de panne de commutateur (37) détermine que le commutateur de freins de stationnement électriques (33) est en panne.

3. Dispositif de freins de stationnement électriques selon la revendication 2,
dans lequel la partie de commande de sélection de mode (40) est configurée de manière à interdire la sélection du mode d'opération de biellette de changement de vitesse, si la partie de détermination de panne de commutateur (37) détermine que le commutateur de freins de stationnement électriques (33) est en panne, et si la partie de détermination d'opération de freins (39) détermine que les freins de stationnement électriques (27L, 27R) sont libérés.

4. Dispositif de freins de stationnement électriques selon l'une quelconque des revendications 1 à 3, comprenant en outre une partie de notification de biellette de changement de vitesse (49) configurée de manière à notifier, à un utilisateur, un actionnement ou une annulation du mode d'opération de biellette de changement de vitesse.

5. Dispositif de freins de stationnement électriques selon l'une quelconque des revendications 1 à 4,
dans lequel le commutateur de freins de stationnement électriques (33) présente une structure mobile pour revenir automatiquement à une position intermédiaire entre un premier côté et un second côté, le commutateur de freins de stationnement électriques (33) étant configuré de manière à verrouiller les freins de stationnement électriques (27L, 27R) lorsqu'il est actionné sur le premier côté, et à libérer les freins de stationnement électriques (27L, 27R) lorsqu'il est actionné sur le second côté ; et
dans lequel le mode de commande passe au mode d'opération de biellette de changement de vitesse si le commutateur de freins de stationnement électriques (33) est actionné de manière à se situer sur le premier côté pendant une période de temps prédéterminée ou plus, et le mode d'opération de biellette de changement de vitesse est annulé si le commutateur de freins de stationnement électriques (33) est actionné de manière à se situer sur le second côté pendant une période de temps prédéterminée ou plus.

6. Dispositif de freins de stationnement électriques selon la revendication 1,
dans lequel, si la partie de détermination de panne de commutateur détermine que le commutateur de freins de stationnement électriques est en panne, et si la partie de détermination d'opération de freins détermine que les freins de stationnement électriques sont verrouillés, la partie de commande de sélection de mode maintient le mode d'opération de biellette de changement de vitesse tandis que le mode d'opération de biellette de changement de vitesse est sélectionné en tant que le mode de commande.
